Europäisches Patentamt

European Patent Office

Office européen des brevets

(19)

(11) Numéro de publication: **0 180 488**
**B1**

# (12) FASCICULE DE BREVET EUROPEEN

(45) Date de publication du fascicule du brevet:
**17.11.88**

(21) Numéro de dépôt: **85401708.4**

(22) Date de dépôt: **03.09.85**

(51) Int. Cl.⁴: **F 42 B 3/10**, F 42 C 19/12,
C 06 D 5/06, B 60 R 21/16

(54) Générateur de gaz ultrarapide à sécurité renforcée.

(30) Priorité: **05.09.84 FR 8413635**

(43) Date de publication de la demande:
**07.05.86 Bulletin 86/19**

(45) Mention de la délivrance du brevet:
**17.11.88 Bulletin 88/46**

(84) Etats contractants désignés:
**DE GB IT**

(56) Documents cités:
**DE - B - 2 460 427**
**FR - A - 1 329 716**
**FR - A - 2 128 891**
**GB - A - 862 772**
**GB - A - 2 057 643**

**KIRK-OTHMER: "Encyclopedia of chemical technology", troisième édition, vol. 9, "Enamels, porcelain or vitreous to ferrites", A Wiley-Interscience Publication, John Wiley & Sons, page 640, New York, US;**

(73) Titulaire: **SOCIETE NATIONALE DES POUDRES ET EXPLOSIFS, 12, quai Henri IV, F-75181 Paris Cédex 04 (FR)**

(72) Inventeur: **Granier, Georges, 24 bis rue du Château, F-91710 Viry Chatillon (FR)**
Inventeur: **Valliere, Yves, Le Beuzit, F-29117 S Pont De Buis (FR)**

## Description

L'invention concerne un générateur pyrotechnique de gaz utilisable notamment sur un véhicule automobile pour actionner les dispositifs de sécurité tels que les rétracteurs de ceintures de sécurité qui sont déclenchés en cas de collision détectée par un accéléromètre taré. De tels générateurs pyrotechniques comprennent, d'une part un corps mécaniquement résistant qui ménage une chambre de combustion operculée dans laquelle est placée une charge génératrice de gaz, et d'autre part un bouchon d'initiation qui comporte une perle d'allumage mise à feu au moyen d'un filament résistant qui se fixe sur le corps et pénètre dans la chambre de combustion.

Les générateurs de gaz ultrarapides sont connus et de très nombreux types de ces générateurs ont déjà été décrits et utilisés notamment dans le domaine de la sécurité automobile, que ces petits générateurs forment un ensemble indépendant ou qu'ils soient directement intégrés dans la structure d'un vérin tendeur de ceinture de sécurité ou d'un enrouleur-rétracteur de ceinture. Par exemple, le brevet d'invention FR-A-2 491 647 décrit notamment un vérin pyrotechnique qui tracte un cable solidaire d'un cylindre extérieur couplé au tambour d'enroulement d'une ceinture de sécurité, et les figures 4 et 5 de ce brevet réprésentent des générateurs de gaz ultrarapides selon le préambule de la revendication 1 qui sont dénommés «cartouches de charge combustible». De telles cartouches correspondent à l'une des structures classiques des générateurs et comprennent, d'une part un corps résistant qui ménage une chambre de combustion operculée dans laquelle est placée une charge génératrice de gaz, et d'autre part un bouchon d'initiation qui est dénomé «détonateur» et pour lequel est schématisée une perle d'allumage mise à feu au moyen d'un filament résistant, ce bouchon se fixant sur le corps et pénétrant dans la chambre de combustion. Dans ce brevet, seule la structure générale connue des générateurs ultrarapides est décrite, et aucune précision n'est donnée sur la nature de la charge combustible ou sur les caractéristiques de ces générateurs, ce qui est normal dans la mesure où, d'une part ce brevet revendique une «commande d'entrainement à cylindre et piston pour les systèmes tendeurs de rappel des enrouleurs automatiques de ceintures de sécurité», et où d'autre part des charges combustibles et des caractéristiques de tels générateurs avaient déjà été décrites antérieurement, notamment dans les brevets FR-A-2 295 360 et FR-A-2 239 870.

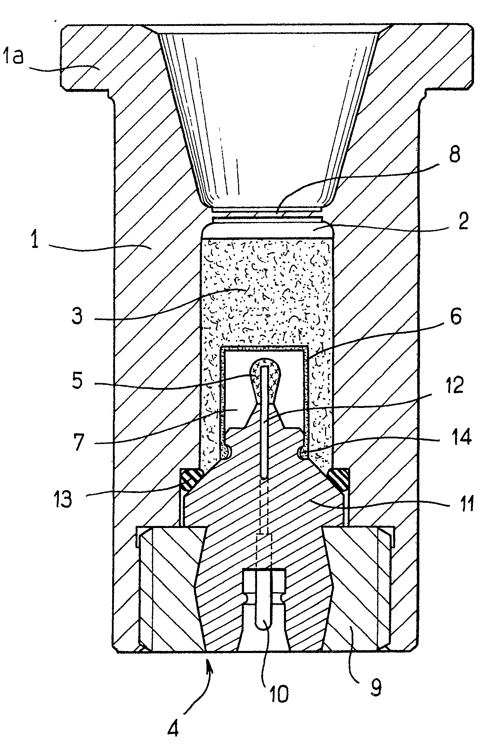

Le brevet FR-A-2 295 360 décrit un dispositif d'allumage générateur de gaz, susceptible d'être monté sur un système de retenue par ceinture de sécurité dans les véhicules automobiles. La tête d'allumage représentée à la figure 2 correspond à une autre structure classique pour laquelle le filament résistant de mise à feu est directement au contact d'une composition pulvérulente à haute sensibilité, et cette charge est contenue dans une enveloppe métallique sertie sur une embase isolante, cette enveloppe métallique étant destinée à assurer la protection du filament soudé contre les trépidations ainsi que le blindage électrique de ce filament.

Le brevet FR-A-2 239 870 décrit notamment une charge génératrice de gaz qui est constituée de grains de poudre homogène à base de nitrocellulose et de nitroglycérine, et d'une poudre d'allumage pulvérulente à base d'oxyde de cuivre et de zirconium, cette charge étant destinée à la propulsion du piston d'un vérin tendeur de ceinture de sécurité.

Selon ces trois brevets antérieurs qui appartiennent à trois sociétés différentes, et conformément aux connaissances en pyrotechnie lorsqu'il est nécessaire d'obtenir des délais de fonctionnement très courts, la poudre d'allumage est directement placée au contact du filament résistant de mise à feu, qui est nu lorsque la poudre présente une haute sensibilité et s'apparente aux explosifs primaires, ou qui est entouré par une perle d'allumage en explosif primaire lorsque la poudre d'allumage est une poudre vive mais non suffisamment sensible. Il est connu que seule cette disposition assure des délais de fonctionnement inférieurs aux 2 ou 3 millisecondes qui sont exigés par les standards et les normes qui ont été édictés par les responsables de la sécurité automobile et par les firmes de construction automobile dès les années 1970–1972. Par contre, une telle disposition présente l'inconvénient, soit d'utiliser une masse de poudre à haute sensibilité qui est loin d'être négligeable lorsque poudre d'allumage est directement placée au contact d'un filament nu avec tous les risques que cela entraine en cas d'élévation anormale de la température ou en cas de récupération abusive de ces explosifs mis dans le commerce, soit d'exposer la perle d'allumage en explosif primaire au frottement de la composition d'allumage ce qui entraine non seulement un risque faible, mais quil est nécessaire de prendre en compte dans les calculs de fiabilité, de prise en feu intempestive, mais qui entraine surtout le risque beaucoup plus important que la perle d'allumage soit érodée et usée par le frottement de la composition d'allumage, puisque ces générateurs sont essentiellement destinés à être montés sur les véhicules automobiles et donc à subir pendant de nombreuses années les vibrations et les trépidations dûes à la circulation de ces véhicules. De plus, de tels générateurs doivent être électriquement protégés afin que toute mise à feu intempestive soit rendue impossible même dans les conditions de plus grand risque.

La présente invention a pour but de maintenir les délais de fonctionnement des générateurs de gaz dans les limites imposées, tout en permettant de renforcer la sécurité par la suppression des principales causes de fonctionnement intempestif ou de non fonctionnement, et cela en améliorant également la sécurité de fabrication de ces générateurs.

Un générateur de gaz ultrarapide selon l'invention comprend d'une part un corps mécaniquement résistant qui ménage une chambre de combustion operculée dans laquelle est placée une charge génératrice de gaz et d'autre part un bouchon d'initiation qui comporte une perle d'allumage mise à feu au moyen d'un filament résistant et qui se fixe sur le dit corps et pénètre dans la chambre de combustion, caractérisé d'une part en ce que le dit bouchon d'initiation comporte un capuchon qui détermine un chambre d'initiation étanche autour de la dite perle d'allumage, et en ce que le dit capuchon a une épaisseur comprise entre 0,2 et 0,5 mm et est réalisé uniquement en un matériau diélectrique qui n'altère pas la stabilité des grains de poudre à la nitrocellulose et en ce que d'autre part la dite charge génératrice de gaz qui est constituée de grains de poudre à base de nitrocellulose et d'une poudre pulvérulente oxydoréductrice comportant au moins un métal, est uniquement disposée à l'extérieur du capuchon.

En effet, il a été découvert que, sous réserve d'utiliser une charge d'allumage particulière, dans des conditions particulières, il était possible de supprimer le contact de la poudre d'allumage avec la perle d'allumage sans accroître le délai de fonctionnement de plus de 0,1 ou 0,2 milliseconde, et cela même lorsque la poudre d'allumage n'est pas une poudre à haute sensibilité. Il a également été découvert qu'il était non seulement possible de ne pas mettre la perle d'allumage en contact avec la poudre d'allumage, mais qu'il était également possible de placer un capuchon autour de la perle d'allumage, ce capuchon présentant une épaisseur suffisante pour que sa rigidité diélectrique évite toute formation d'étincelles entre le filament de mise à feu et le corps du générateur, et cela sans accroître le délai de fonctionnement de plus de 0,3 ou 0,4 milliseconde. La protection électrique est encore renforcée dans le cas où une poudre d'allumage contenant un métal peut former un léger dépôt conducteur à l'extérieur du capuchon qui doit présenter une étanchéité suffisante, de manière à ce qu'en aucun cas la poudre d'allumage ne puisse pénétrer dans la chambre d'initiation qui entoure la perle d'allumage et qui doit rester libre, aucune poudre ne se trouvant à l'intérieur du capuchon. En complément aux conditions particulières d'étanchéité et de non altération de la stabilité des grains de poudre à base de nitrocellulose par le matériau du capuchon, il été découvert le rôle prépondérant du début de la combustion de la charge génératrice de gaz, l'opercule de la chambre de combustion ne devant s'ouvrir que sous une pression supérieure à 100 bars, une pression de 50 bars pouvant être admissible dans des cas particuliers où le délai de fonctionnement peut être porté à plus de 3 millisecondes, mais cette pression d'ouverture devant être portée dans toute la mesure du possible à au moins 300 bars afin de réduire le temps de fonctionnement et de réduire la dispersion des valeurs des pressions en fonction du temps relevées expérimentalement.

Selon une mise en œuvre particulière, le capuchon diélectrique est réalisé en matériau compact, malgré la plus grande résistance mécanique que cela entraine au moment de la rupture qui suit la mise à feu de la perle d'allumage, mais des matériaux alvéolaires à pores fermés sont admissibles. Plus particulièrement le matériau du capuchon est choisi dans le groupe constitué par les polyéthylènes et les polypropylènes, cette condition préférentielle devenant impérative lorsque les grains de poudre à base de nitrocellulose comportent de la diphénylamine comme stabilisant puisqu'il a été découvert que, dans les conditions particulières de qualification propres à l'industrie automobile, il n'est pas possible d'utiliser des résines éthylène-vinyl acétates et des polyamides, surtout des polyamides 11 qui sont pourtant des matières plastiques couramment utilisées dans le domaine de la pyrotechnie. Le cas des éthylène-vinyl acétates est particulièrement flagrant puisqu'il suffit de maintenir à 105 °C pendant deux jours un mélange de cette résine et de poudre à base de nitrocellulose, dont le stabilisant est la diphénylamine et le plastifiant un mélange de dinitrotoluène et de dibutylphtalate, pour constater un dégazage conséquent qui prouve la non stabilité de ces grains de poudre en présence de ce matériau plastique. Un matériau tel que le «RILSAN» qui est une polyamide 11 présente de meilleures caractéristiques qui le rendrait utilisable à la condition, soit de métalliser la surface extérieure du capuchon, soit de le revêtir extérieurement d'une fine enveloppe métallique ce qui présenterait l'avantage d'éviter toute localisation des charges électrostatiques mais ce qui compliquerait la fabrication et diminuerait la fiabilité du générateur dans le cas de la métallisation qui peut s'éroder par frottement. Cette complication est d'autant plus inutile qu'il a été découvert que lorsqu'une poudre d'allumage pulvérulente contenant au moins un métal de très faible granulométrie est utilisée, il se produit alors un léger dépôt à la surface extérieure du capuchon qui est suffisamment conducteur pour éviter les localisations de charges électrostatiques, et ainsi limiter encore les risques de formation d'une étincelle au travers de ce capuchon, d'où l'intérêt particulier d'utiliser une poudre d'allumage qui est conductrice, à l'échelle des courants de fuite, lorsque le matériau du capuchon est réalisé exclusivement en un matériau diélectrique.

Plus particulièrement, l'épaisseur du capuchon en matériau diélectrique est comprise entre 0,2 et 0,5 mm, ces épaisseurs compatibles avec l'induction d'un léger retard de fonctionnement permettant d'obtenir une bonne protection électrique de l'informateur constitué par le filament et la perle d'allumage, notamment lorsque le matériau utilisé est le polyéthylène haute densité qui présente une rigidité diélectrique très satisfaisante.

Avantageusement, le capuchon diélectrique est fixé au bouchon d'initiation au moyen d'un bourrelet qui s'emboîte dans une gorge circulaire, et l'extrémité interne de ce bouchon d'initiation comporte un cône de serrage d'un joint torique coincé contre le fond et la surface cylindrique d'un lamage qui prolonge la chambre de combustion.

Selon une mise en œuvre préférentielle, les

grains de poudre à base de nitrocellulose présentent une épaisseur à brûler comprise entre 0,1 et 0,6 millimètre, et plus particulièrement entre 0,15 mm pour présenter une résistance mécanique suffisante, et 0,4 mm afin de maintenir un coefficient de remplissage suffisant malgré la disposition en vrac des grains de poudre dans la chambre de combustion. Les poudres à base de nitrocellulose, et donc exemptes d'huiles explosives telles que la nitroglycérine, permettent d'obtenir la meilleure sécurité, et notamment les poudres B monotubulaires compactes non poreuses, comportant d'une part de la diphénylamine comme stabilisant et d'autre part un mélange de dinitrotoluène et de dibutylphtalate comme plastifiant.

Selon une mise en œuvre préférentielle également, la poudre oxydoréductrice contient au moins 30% de métal, et plus particulièrement du zirconium, intimement mélangé avec du chromate de baryum et du perchlorate d'ammonium.

Avantageusement le rapport pondéral entre la poudre oxydoréductrice et la poudre à base de nitrocellulose est compris entre 0,05 et 1 ce rapport n'excédant pas 0,5 lorsque la poudre oxydoréductrice est à base de zirconium, de chromate de baryum, de perchlorate d'ammonium et de bichromate d'ammonium, et ce rapport ne descendant pas en dessous de 0,1 dans le cas où l'opercule se romprait à une pression inférieure à 300 bars.

Préférentiellement le volume de la charge génératrice de gaz est inférieur au volume de la chambre de combustion délimitée entre l'opercule, le corps résistant et le bouchon d'initiation avec son capuchon, de manière à ce qu'au cours de la fabrication, lorsque ce bouchon est mis en place sur le corps, le fond du capuchon ne touche pas la surface libre de la charge génératrice de gaz, ce qui permet de travailler dans les meilleures conditions de sécurité. De plus, lors des très nombreux essais effectués il a été constaté que non seulement ce volume d'air emprisonné n'avait aucun effet sensible sur les délais de fonctionnement, mais qu'en plus il contribuait à réduire la dispersion des valeurs des pressions en fonction du temps relevées expérimentalement, et qu'il ne nuisait en rien au maintien d'un dépôt faiblement conducteur de la poudre oxydoréductrice à la surface extérieure du capuchon. Le corps du générateur est lui-même réalisé en un matériau permettant la circulation de charges électriques, ce matériau étant métallique ou étant réalisé en plastique chargé de particules conductrices telles que des microbilles de bronze.

Les avantages obtenus grâce à cette invention consistent essentiellement en ce que la fiabilité de fonctionnement du générateur est notablement augmentée, cette augmentation était d'autant plus importante que le nombre d'années d'installation sur une automobile est lui-même élevé, le risque de dégradation de la perle d'allumage étant quasiment nul et n'étant dû qu'à l'inflammateur lui-même et non au générateur de gaz selon l'invention. L'obtention d'une fiabilité maximale est particulièrement importante pour des dispositifs de sauvegarde de la vie humaine tels que des ceintures de sécurité, et cette amélioration de la fiabilité est accompagnée dune sécurité renforcée qui résulte d'une part de la suppression des risques de déclenchement intempestif par friction de la perle d'allumage ou par décharge électrostatique, et d'autre part de la suppression des risques liés à l'utilisation de compositions d'allumage à haute sensibilité pouvant détoner, et qui résulte également de la limitation des risques liés à une élévation anormale de la température.

Dans ce qui suit l'invention est exposée plus en détail à l'aide d'un dessin dont la figure unique représente un mode particulier d'exécution qui est le mode préférentiel.

Le générateur de gaz ultrarapide est représenté sensiblement à l'échelle 3 et le corps résistant (1) qui comporte une collerette de fixation (1a) est réalisé en duraluminium à décolleter afin d'usiner l'opercule (8) dans la masse l'embase (9) du bouchon d'initiation (4) étant réalisée dans le même matériau. L'opercule présente une épaisseur de 0,6 mm qui correspond à une pression théorique de cisaillement d'un peu plus de 500 bars dans la chambre de combustion (2), ce cisaillement se produisant de 1,2 à 1,4 millisecondes après l'application de l'impulsion électrique de mise à feu aux bornes (10) de l'initiateur (11). Cet initiateur est réalisé en matériau isolant qui est surmoulé à l'intérieur de l'embase (9) et qui englobe les deux broches (12) connectées aux bornes extérieures (10) et reliées entre elles par le filament résistant, la perle d'allumage (5) enrobant les extrémités libres de ces broches et le filament. De tels inflammateurs sont disponibles dans le commerce, et par exemple la société NCS (Nouvelles Cartoucheries de Survilliers) dispose d'inflammateurs, dont la perle d'allumage est à base de chlorate de potassium, de sulfocyanure de plomb et d'hydrure de zirconium, qui donnent toute satisfaction pour la mise en œuvre de la présente invention. L'extrémité interne de l'initiateur (11) comporte tout d'abord un cône de serrage d'un joint torique d'étanchéité (13) qui est coincé contre le fond et la surface cylindrique d'un lamage ménagé à l'extérieur de la chambre de combustion, et cette extrémité comporte ensuite une gorge périphérique ménagée à la base d'un épaulement cylindrique qui permet un appui suffisant du capuchon diélectrique (6) dont le bourrelet interne (14) à l'ouverture s'enclanche de façon étanche sur la gorge périphérique.

Ce capuchon présente une épaisseur de 0,25 mm et il est réalisé en polyéthylène haute densité injecté. Un tel capuchon permet par exemple la décharge d'un condensateur de 550 pF sous 25 kV avec une résistance en série de 5 kiloohms montée entre l'une des bornes (10) et le corps (1), ce qui correspond à une énergie de décharge de 156 mJ qui ne provoque pas la mise à feu de l'inflammateur. Le volume de la chambre d'initiation (7) influe très peu sur la durée de fonctionnement, et la caractéristique la plus importante correspond à la distance minimum qui existe entre l'un des éléments conducteurs internes à la perle d'allumage (5) et la surface intérieure du capuchon puisque cette distance libre contribue à renforcer l'isolation de sécurité et à compléter ainsi l'isolation procurée par le capuchon diélectrique (6). La poudre à base de nitrocellulose utilisée est une poudre B du type BTU qui est commercialisée par la SNPE (Société Nationale des Poudres et Explosifs) dont le stabilisant est la diphénylamine et dont le plastifiant est un mélange de dinitrotoluène et de dibutylphtalate. Les grains de poudre sont monotubulaires, le diamètre extérieur étant de 1 mm et le diamètre intérieur de 0,2 mm, ce qui correspond à une épaisseur à brûler d'une valeur de 0,2 mm puisque l'épaisseur à brûler est égale à la moitié de l'épaisseur de la paroi. La poudre pulvérulente oxydoréductrice qui est utilisée comme poudre d'allumage est préférentiellement de la poudre MIRA qui est commercialisée par la SNPE, cette poudre présentant notamment une faible sensibilité au confinement qui rend toute détonation impossible dans les conditions d'emplois, mêmes anormales, ce qui n'est pas le cas de très nombreuses poudres d'allumage ou des poudres noires qui pourraient détoner dans certaines conditions. La combinaison de ces deux types de poudre est particulièrement importante, la poudre oxydoréductrice assurant une montée très rapide en pression, la poudre B ayant un meilleur rendement gazeux et permettant un léger étalement dans le temps de la génération de gaz après la rupture de l'opercule, puisque la durée totale de la combustion des grains de poudre B est de 3 à 5 millisecondes selon la quantité de poudre d'allumage utilisée et selon l'épaisseur de l'opercule. Parmi les différents essais effectués, ceux qui ont été réalisés avec de la poudre MIRA utilisent des masses de poudre qui s'échelonnent entre 0,17 et 0,34 g, combinées respectivement avec des masses de poudre BTU comprises entre 0,9 et 0,6 g. Tous les essais conduisent à des délais de fonctionnement inférieurs à 2,2 millisecondes et des quantités de poudre MIRA limitées à 0,05 ou 0,06 g conduisent encore à des résultats admissibles pour des essais à 20 °C, mais induisent des délais de fonctionnement trop longs pour les essais à basses températures.

D'autres modes de réalisations de l'invention sont réalisables notamment en ce qui concerne le choix de la poudre d'allumage qui doit être une poudre non détonante contenant un métal, les poudres totalement isolantes au point de vue électrique ne permettant pas d'obtenir des délais de fonctionnement aussi réduits, les poudres au zirconium permettant une meilleurs répartition des charges électriques à la surface extérieure du capuchon (6) que les poudres à l'aluminium. Différents types de capuchons peuvent également être réalisés, et notamment un capuchon en mousse semi-rigide à pores fermés qui coulisse au contact de la surface latérale de la chambre de combustion et s'adapte autour de la perle d'allumage, la chambre d'initiation (7) étant alors extrêmement réduite mais permettant à la charge génératrice de gaz (3) d'occuper la totalité du volume libre de la chambre de combustion, l'isolation électrique provenant alors de l'alternance des cavités remplies d'air et des pellicules de polymère utilisé pour constituer la mousse. Un tel matériau expansé permet de diminuer la résistance mécanique du capuchon tout en permettant le maintien d'une bonne isolation, d'autres moyens de diminuer la résistance du fond du capuchon tels que des rainures d'affaiblissement pouvant être utilisés notamment lorsque l'épaisseur du capuchon est plus importante. De la même manière des rainures d'affaiblissement peuvent être pratiquées sur l'opercule (8) afin d'éviter le brusque cisaillement à haute pression de cet opercule, des rainures radiales permettant une ouverture par relèvement des secteurs de l'opercule, ce qui supprime toute projection métallique mais induit une légère augmentation de la durée de fonctionnement.

**Revendications**

1. Générateur de gaz ultrarapide, utilisable notamment sur un véhicule automobile, comprenant d'une part un corps mécaniquement résistant (1) qui ménage une chambre de combustion (2) operculée dans laquelle est placée une charge génératrice de gaz (3), et d'autre part un bouchon d'initiation (4) qui comporte une perle d'allumage (5) mise à feu au moyen d'un filament résistant et qui se fixe sur le corps (1) et pénètre dans la chambre de combustion caractérisé d'une part en ce que le bouchon d'initiation (4) comporte un capuchon (6) qui détermine une chambre d'initiation (7) étanche autour de la perle d'allumage (5) et en ce que le dit capuchon (6) a une épaisseur comprise entre 0,2 et 0,5 mm et est réalisé uniquement en un matériau diélectrique qui n'altère pas la stabilité des grains de poudre à base de nitrocellulose et d'autre part en ce que la charge génératrice de gaz (3), qui est constituée de grains de poudre à base de nitrocellulose et d'une poudre pulvérulente oxydoréductrice comportant au moins un métal, est uniquement disposée à l'extérieur du capuchon.

2. Générateur de gaz selon la revendication 1, caractérisé en ce que l'opercule (8) de la chambre de combustion ne s'ouvre que sous une pression supérieure à 100 bars.

3. Générateur de gaz selon la revendication 1, caractérisé en ce que le capuchon (6) est réalisé en matériau diélectrique compact.

4. Générateur de gaz selon la revendication 1, caractérisé en ce que le matériau du capuchon (6) est choisi dans le groupe constitué par les polyéthylènes et les polypropylènes.

5. Générateur de gaz selon la revendication 1, caractérisé en ce que les grains de poudre à base de nitrocellulose présentent une épaisseur à brûler comprise entre 0,1 et 0,6 millimètre.

6. Générateur de gaz selon la revendication 1, caractérisé en ce que le stabilisant de la poudre à base de nitrocellulose est la diphénylamine et en ce que le plastifiant est un mélange de dinitrotoluène et de dibutylphtalate.

7. Générateur de gaz selon l'une des revendications 1, 5 ou 6, caractérisé en ce que les grains de poudre à base de nitrocellulose sont monotubulaires et sont réalisés en poudre compacte.

8. Générateur de gaz selon la revendication 1, caractérisé en ce que la poudre oxydoréductrice contient au moins 30% de métal.

9. Générateur de gaz selon la revendication 1, caractérisé en ce que la poudre oxydoréductrice contient du zirconium.

10. Générateur de gaz selon l'une des revendications 8 ou 9, caractérisé en ce que la poudre oxydoréductrice est à base de zirconium, de chromate de baryum et de perchlorate d'ammonium.

11. Générateur de gaz selon l'une des revendications 1 ou 5 à 10, caractérisé en ce que le rapport pondéral entre la poudre oxydoréductrice et la poudre à base de nitrocellulose est compris entre 0,05 et 1 et préférentiellement entre 0,1 et 0,5.

12. Générateur de gaz selon la revendication 1, caractérisé en ce que le volume de la charge génératrice de gaz (3) est inférieur au volume de la chambre de combustion (2).

## Patentansprüche

1. Ultraschneller Gaserzeuger, insbesondere verwendbar für Automobile, mit einerseits einem mechanisch widerstandsfähigen Körper (1), in dem eine verschlossene Brennkammer (2) eingearbeitet ist, in der eine gaserzeugende Ladung (3) angeordnet ist, und andererseits mit einem Zündverschluss (4), der eine Zündperle (5) aufweist, die mittels einer Widerstandswicklung gezündet wird und die an dem Körper (1) befestigt ist und in die Brennkammer hineinragt, dadurch gekennzeichnet, dass der Zündverschluss (4) eine Kappe (6) aufweist, die eine dichte Zündkammer (7) um die Zündperle (5) herum definiert und dadurch, dass die Kappe (6) eine Dicke von 0,2 bis 0,5 mm hat und ausschliesslich aus einem dielektrischen Material ist, das die Stabilität der Pulverkörner auf Nitrozellulosebasis nicht verändert und andererseits, dass die gaserzeugende Ladung (3), die aus Pulverkörnern auf Nitrozellulosebasis und einem mehlförmigen Oxidations-Reduktionspulver, das mindestens ein Metall aufweist, besteht, lediglich ausserhalb der Kappe (6) angeordnet ist.

2. Gaserzeuger nach Anspruch 1, dadurch gekennzeichnet, dass sich der Verschluss (8) der Brennkammer erst ab einem Druck über 100 bar öffnet.

3. Gaserzeuger nach Anspruch 1, dadurch gekennzeichnet, dass die Kappe (6) aus einem dielektrischen kompakten Material gefertigt ist.

4. Gaserzeuger nach Anspruch 1, dadurch gekennzeichnet, dass das Material der Kappe (6) aus der Gruppe der Polyethylene und der Polypropylene gebildet ist.

5. Gaszerzeuger nach Anspruch 1, dadurch gekennzeichnet, dass die Pulverkörner auf Nitrozellulosebasis eine Brenndicke zwischen 0,1 und 0,6 mm aufweisen.

6. Gaserzeuger nach Anspruch 1, dadurch gekennzeichnet, dass das Stabilisierungsmittel des Pulvers auf Nitrozellulosebasis Diphenylamin ist und dadurch, dass der Weichmacher aus einer Mischung aus Dinitrotoluol und Dibutylphthalat besteht.

7. Gaserzeuger nach einem der Ansprüche 1, 5 oder 6, dadurch gekennzeichnet, dass die Pulverkörner auf Nitrozellulosebasis monotubulär sind und aus kompaktem Pulver bestehen.

8. Gaserzeuger nach Anspruch 1, dadurch gekennzeichnet, dass das Oxidations-Reduktionspulver mindestens 30% Metall enthält.

9. Gaserzeuger nach Anspruch 1, dadurch gekennzeichnet, dass das Oxidations-Reduktionspulver Zirkonium enthält.

10. Gaserzeuger nach einem der Ansprüche 8 oder 9, dadurch gekennzeichnet, dass das Oxidations-Reduktionspulver hergestellt ist auf der Basis von Zirkonium, Bariumchromat und Ammoniumperchlorat.

11. Gaserzeuger nach einem der Ansprüche 1 oder 5 bis 10, dadurch gekennzeichnet, dass das Gewichtsverhältnis zwischen dem Oxidations-Reduktionspulver und dem Pulver auf Nitrozellulosebasis zwischen 0,05 und 1, vorzugsweise zwischen 0,1 und 0,5 liegt.

12. Gaserzeuger nach Anspruch 1, dadurch gekennzeichnet, dass das Volumen der gaserzeugenden Ladung (3) kleiner als das Volumen der Brennkammer (2) ist.

## Claims

1. Ultrafast gas generator capable of being employed particularly in a self-propelled vehicle, comprising, on the one hand, a mechanically resistant body (1) which provides an operculate combustion chamber (2) in which a gas-generating charge (3) is placed, and, on the other hand, an initiating plug (4) which comprises an ignition bead (5) ignited by means of a resistant filament and which is attached to the body (1) and which enters the combustion chamber, characterized in that the initiating plug (4) comprises a cap (6) which determines a sealed initiating chamber (7) around the ignition bead (5) and in that the said cap (6) has a thickness of between 0,2 and 0,5 mm and is made only of a dielectric material which does not modify the stability of the grains of nitrocellulose-based powder and, on the other hand, in that the gas-generating charge (3), which consists of grains of nitrocellulose-based powder and of a pulverulent oxidoreducing powder comprising at least one metal, is arranged only outside the cap.

2. Gas generator according to Claim 1, characterized in that the operculum (8) of the combustion chamber opens only at a pressure greater than 100 bars.

3. Gas generator according to Claim 1, characterized in that the cap (6) is made of a compact dielectric material.

4. Gas generator according to Claim 1, characterized in that the material of the cap (6) is chosen from the group consisting of polyethylenes and polypropylenes.

5. Gas generator according to Claim 1, characterized in that the grains of nitrocellulose-based powder have a burning thickness of between 0,1 and 0,6 millimetre.

6. Gas generator according to Claim 1, characterized in that the stabilizer of the nitrocellulose-based powder is diphenylamine and in that the plasticizer is a mixture of dinitrotoluene and dibutyl phthalate.

7. Gas generator according to one of Claims 1, 5 or 6, characterized in that the grains of nitrocellulose-based powder are monotubular and are made of compact powder.

8. Gas generator according to Claim 1, characterized in that the oxidoreducing powder contains at least 30% of metal.

9. Gas generator according to Claim 1, characterized in that the oxidoreducing powder contains zirconium.

10. Gas generator according to either of Claims 8 or 9, characterized in that the oxidoreducing powder is based on zirconium, barium chromate and ammonium perchlorate.

11. Gas generator according to one of Claims 1 or 5 to 10, characterized in that the weight relationship between the oxidoreducing powder and the nitrocellulose-based powder is between 0,05 and 1 and preferably between 0,1 and 0,5.

12. Gas generator according to Claim 1, characterized in that the volume of the gas-generating charge (3) is smaller than the volume of the combustion chamber (2).